# EUROPÄISCHE PATENTSCHRIFT

(11) **EP 3 781 725 B1**
(45) Veröffentlichungstag und Bekanntmachung des Hinweises auf die Patenterteilung: **23.10.2024**
(21) Anmeldenummer: 19756177.2
(22) Anmeldetag: 20.08.2019
(51) Int. Cl.: C25B 11/04, C25B 15/08, C01B 3/26, C25B 1/04, C25B 9/05, C25B 9/23, F17C 11/00

(54) **VORRICHTUNG UND VERFAHREN ZUM FREISETZEN VON CHEMISCH GEBUNDENEM WASSERSTOFF IN FORM VON WASSERSTOFFGAS UNTER DRUCK SOWIE EINRICHTUNG UND WASSERSTOFFTANKSTELLE MIT EINER DERARTIGEN VORRICHTUNG**
APPARATUS AND METHOD FOR RELEASING CHEMICALLY BOUND HYDROGEN IN THE FORM OF HYDROGEN GAS UNDER PRESSURE AND DEVICE AND HYDROGEN FILLING STATION COMPRISING SUCH AN APPARATUS
DISPOSITIF ET PROCÉDÉ DESTINÉS À LIBÉRER DE L'HYDROGÈNE LIÉ CHIMIQUEMENT SOUS FORME D'HYDROGÈNE GAZEUX SOUS PRESSION ET ÉQUIPEMENT ET STATION DE REMPLISSAGE D'HYDROGÈNE POURVUE D'UN TEL DISPOSITIF

(30) Priorität: 27.09.2018 DE 102018216592
(43) Veröffentlichungstag der Anmeldung: 24.02.2021
(73) Patentinhaber: HYDROGENIOUS LOHC TECHNOLOGIES GMBH, 91058 Erlangen (DE)
(72) Erfinder: WASSERSCHEID, Peter, 91054 Erlangen (DE); TEICHMANN, Daniel, 80796 München (DE)
(74) Vertreter: Rau, Schneck & Hübner Patentanwälte Rechtsanwälte PartGmbB
(86) Internationale Anmeldenummer: PCT/EP2019/072209
(87) Internationale Veröffentlichungsnummer: WO 2020/064222

(56) Entgegenhaltungen:
- EP-A1- 2 803 755
- DE-A1- 102014 201 332
- DE-A1- 102015 118 207
- US-A1- 2016 024 669
- US-A1- 2016 060 771
- US-A1- 2018 265 995

## Beschreibung

Die vorliegende Patentanmeldung nimmt die Priorität der deutschen Patentanmeldung DE 10 2018 216 592.0 in Anspruch, deren Inhalt durch Bezugnahme hierin aufgenommen wird

Die Erfindung betrifft eine Vorrichtung und ein Verfahren zum Freisetzen von chemisch gebundenem Wasserstoff in Form von Wasserstoffgas unter Druck sowie eine Einrichtung und eine Wasserstofftankstelle mit einer derartigen Vorrichtung.

EP 2 803 755 A1, DE 10 2015 118 207 A1, US 2016/0060771 A1, US 2016/0024669 A1 und US 2018/0265995 A1 offenbaren Vorrichtungen zum Freisetzen von Wasserstoffgas aus Wasser durch Elektrolyse.

Die DE 10 2012 004 444 A1 offenbart eine Wasserstofftankstelle, bei der Wasserstoffgas in chemisch gebundener Form an einem Wasserstoffspeichermedium gebunden ist. Das Wasserstoffspeichermedium ermöglicht eine gefahrlose und energiedichte Speicherung des Wasserstoffs. Wenn elementarer Wasserstoff von dem Wasserstoffspeichermedium freigesetzt wird, muss er für die Nutzung in einem Wasserstoff-Fahrzeug als Druckgas mit einem Druck von beispielsweise 700 bar bereitgestellt werden. Die Freisetzung des Wasserstoffgases erfolgt in einem Dehydrierreaktor. Bei der Freisetzung von Wasserstoffgas mit einem aus dem Stand der Technik bekannten Dehydrierreaktor wird das Wasserstoffgas mit einem Druck von unter 5 bar zur Verfügung gestellt. Für eine Druckerhöhung ist ein zusätzlicher Kompressor nötig. Anschließend wird das Wasserstoffgas mit dem Kompressor komprimiert.

Der vorliegenden Erfindung liegt die Aufgabe zugrunde, die Bereitstellung von Wasserstoffgas unter Hochdruck zu verbessern, insbesondere zu vereinfachen.

Die Aufgabe wird durch die Merkmale der Ansprüche 1, 5 und 8 gelöst. Erfindungsgemäß wurde erkannt, dass das Freisetzen und Bereitstellen von Wasserstoffgas mit erhöhtem Druck in einem einstufigen Prozess möglich ist. Von einem zumindest teilweise beladenen Wasserstoffträgermedium werden an einer Anode Protonen abgespalten, durch eine protonenleitende Membran gefördert und an einer Kathode mit einem Kathodenkatalysator zu Wasserstoffgas reduziert. Eine dafür vorgesehen Vorrichtung weist eine Anodenkammer auf, in der das zumindest teilweise beladene Wasserstoffträgerermedium bereitgestellt wird. An die Anodenkammer grenzt eine Anode mit einem Anodenkatalysator an. Der Anodenkatalysator ist an der Anode angebracht, insbesondere ist die Anode mit dem Anodenkatalysator beschichtet.

Zwischen der Anode und der Kathode ist die protonenleitende Membran angeordnet, die ein perfluoriertes Copolymer aufweist, das als ionische Gruppe eine Sulfogruppe enthält. Das perfluorierte Copolymer gehört zu den Ionomeren und ist als Material unter der Marke Nafion bekannt.

Eine protonenleitende Membran im Sinne der Erfindung ist ein Medium, das Protonen leitet und weitgehend dicht gegen Wasserstoffgas ist. Weitgehend dicht bedeutet, dass das Medium eine Durchlässigkeit gegenüber Wasserstoffgas von weniger als 1%, insbesondere weniger als 0,1%, insbesondere weniger als 0,01% und insbesondere weniger als 0,001% aufweist.

Die Anode ist mit der Kathode auch über eine Spannungsquelle verbunden. Durch das von der Spannungsquelle bereitgestellte Spannungspotential werden die Protonen durch die Membran transportiert. An die Kathode grenzt eine Kathodenkammer an, in der das freigesetzte Wasserstoffgas aufgenommen wird. Die Vorrichtung entspricht einem elektrochemischen Kompressor. Die Anodenseite der Vorrichtung bildet die Niederdruckseite. Die Kathodenseite, die von der Anodenseite durch die Membran getrennt ist, bildet die Hochdruckseite der Vorrichtung.

Überraschend wurde gefunden, dass die erfindungsgemäße Vorrichtung geeignet ist, an der Anode Protonen direkt von dem zumindest teilweise beladenen Wasserstoffträgermedium abzuspalten. Bei einem aus der DE 691 00 584 T2 bekannten elektrochemischen Verdichter dient Wasserstoffgas als Arbeitsfluid, das an der Anode gespalten wird. Erfindungsgemäß ist es entbehrlich, Wasserstoff von dem Wasserstoffträgermedium in einen ersten Schritt freizusetzen und in einem Kompressor in einem zweiten Schritt zu verdichten.

Der auf der Seite der Kathode gebildete Wasserstoff kann nicht durch die Membran zurück diffundieren und wird daher in der Kathodenkammer unter Druckerhöhung angereichert. Die erfindungsgemäße Vorrichtung ermöglicht es, organisch gebundenen Wasserstoff in einem Schritt in einem elektrochemischen Direkt-Kompressor zu Druckwasserstoff mit hoher Reinheit umzusetzen. Mit der erfindungsgemäßen Vorrichtung kann chemisch, insbesondere organisch, gebundener Wasserstoff in Form von Protonen vorteilhaft von dem Wasserstoffträgermedium freigesetzt und in einem Schritt unmittelbar unter erhöhtem Druck bereitgestellt werden. Die Abgabe von Wasserstoffgas beispielsweise in einer Wasserstofftankstelle für Fahrzeuge ist dadurch vereinfacht und unmittelbar möglich. Der Infrastrukturaufwand ist reduziert. Ein separater Kompressor ist entbehrlich oder kann - falls nötig - kleiner dimensioniert und/oder kosteneffizienter betrieben werden. Die Speicherung von Wasserstoff unter Hochdruck und/oder tiefen Temperaturen an einer Wasserstofftankstelle ist entbehrlich. Das Wasserstoffträgermedium ist insbesondere eine gasförmige, flüssige oder feste organische Verbindung.

Überraschend wurde auch gefunden, dass der Gesamtenergiebedarf für das Freisetzen und Bereitstellen von Wasserstoffgas unter Hochdruck gegenüber dem aus dem Stand der Technik bekannten zweistufigen Verfahren reduziert ist. Es wurde gefunden, dass die Energieeinsparung bei mindestens 3% des unteren Brennwerts des durch die Vorrichtung komprimierten Wasserstoffs liegt.

Bei dem erfindungsgemäßen Verfahren erfolgt die direkte Kompression von chemisch gebundenem Wasserstoff, also die Kompression und die Freisetzung, in einem elektrochemischen Schritt. Der endotherme Freisetzungs-Aufwand wird elektrisch aufgebracht. Für die Kompression des freigesetzten Wasserstoffgases ist im Wesentlichen kein Zusatzaufwand erforderlich, da die Kompression des Wasserstoffgases aufgrund der Bauform der erfindungsgemäßen Vorrichtung im Wesentlichen selbsttätig erfolgt. Das erfinderische Verfahren ist energetisch günstiger als das aus dem Stand der Technik bekannte zweistufige Verfahren, bei dem für die Freisetzung und für die Kompression von Wasserstoffgas jeweils eigene Energiebeträge aufgewandt werden müssen.

Ein weiterer wesentlicher Vorteil der Erfindung besteht darin, dass durch die Wasserstoffkompression in der Kathodenkammer der Anodenkammer Wasserstoff entzogen wird. Dadurch wird die thermodynamische Triebkraft für die Wasserstofffreisetzung aus der organisch gebundenen Form erhöht.

Dadurch, dass die erfindungsgemäße Vorrichtung dem Aufbau einer Brennstoffzelle ähnlich ist, ist der von der Vorrichtung unter Hochdruck bereitgestellte Wasserstoff für die Nutzung in einer Brennstoffzelle sehr gut geeignet.

Eine Vorrichtung, bei der an die Kathodenkammer eine Druckleitung mit einem Druckventil angeschlossen ist, vereinfacht die Bereitstellung des komprimierten Wasserstoffgases unter hohem Druck.

Ein Anodenkatalysator gemäß Anspruch 2 hat sich als besonders geeignet erwiesen, um die Abspaltung der Protonen aus dem Wasserstoffträgermedium zu begünstigen. Der Anodenkatalysator ist insbesondere ein Legierungskatalysator. Ein Kathodenkatalysator gemäß Anspruch 3 begünstigt die Bildung des komprimierten Wasserstoffs in der Kathodenkammer.

Der Kathodenkatalysator ist an der Kathode angebracht. Insbesondere ist die Kathode mit dem Kathodenkatalysator beschichtet.

Eine Vorrichtung nach Anspruch 4 kann vorteilhaft als kompakte Baueinheit bereitgestellt werden. Insbesondere ist es nicht erforderlich, einen Dehydrierreaktor mit einem elektrochemischen Kompressor zu koppeln. Die Vorrichtung ist in einer kombinierten Prozesseinheit ausgeführt. Zusätzlich kann die Spannungsquelle in dem Gehäuse integriert sein.

Eine Einrichtung gemäß Anspruch 5 ermöglicht die Ausnutzung der höheren Wasserstoffspeicherdichte eines Wasserstoffspeichermediums, insbesondere ein flüssiges organisches Medium, das auch als liquid organic hydrogen carrier (LOHC) bekannt ist. Insbesondere dient als Wasserstoffspeichermedium Perhydro-Dibenzyltoluol, kurz H18-DBT. In einem Transferhydrierreaktor wird das zumindest teilweise beladene Wasserstoffspeichermedium zumindest teilweise entladen, insbesondere zu Perhydro-Dibenzyltoluol, kurz H0-DBT. Ein derartiger Transferhydrierreaktor ist beispielsweise bekannt aus der DE 10 2014 201 332 A1. Der Wasserstoff wird von dem Wasserstoffspeichermedium unmittelbar auf das Wasserstoffträgermedium übertragen, das dadurch insbesondere von Aceton zu 2-Propanol hydriert wird. Das Wasserstoffträgermedium kann vorteilhaft in der Vorrichtung zum Freisetzen des Wasserstoffgases unter erhöhtem Druck genutzt werden. Durch die Nutzung des Transferhydrierreaktors wird die erhöhte Speicherdichte des Wasserstoffspeichermediums mit der verbesserten Umsetzung des Wasserstoffträgermediums in dem elektrochemischen Direkt-Kompressor vorteilhaft kombiniert.

Eine Einrichtung gemäß Anspruch 6 weist eine zuverlässige Infrastruktur auf, um das Wasserstoffspeichermedium für die Transferhydrierung bereitzustellen.

Eine Wasserstofftankstelle gemäß Anspruch 7 weist die Vorteile der vorstehend beschriebenen Vorrichtung oder Einrichtung auf, worauf hiermit verwiesen wird. An der Tankstelle kann Wasserstoffgas unter Hochdruck für ein Fahrzeug, insbesondere ein Automobil, ein Lastkraftwagen, aber auch für Schienenfahrzeuge und Wasserfahrzeuge unmittelbar bereitgestellt werden. Die Abgabe von Wasserstoffgas unter Hochdruck ist vereinfacht. Die Abgabe des Wasserstoffgases unter Hochdruck ist zuverlässig und reproduzierbar möglich.

Ein Verfahren gemäß Anspruch 9 stellt Wasserstoffgas mit erhöhtem Druck zur Verfügung. Ein derartiges Verfahren ist geeignet, um eine Wasserstofftankstelle zu betreiben. Ein derartiges Verfahren kann aber auch für Hydrierprozesse in der chemischen Industrie genutzt werden, bei welchen Wasserstoffgas auf einem Druckniveau liegt, das beispielsweise 5 bar oder mehr beträgt. Derartige Hydrierprozesse sind beispielsweise die Hydrierung von C-C-Doppelbindungen oder C-C-Dreifachbindungen und/oder die Hydrierung von C-N-Doppelbindungen oder C-O-Doppelbindungen.

Bei dem Verfahren gemäß Anspruch 10 wird das Wasserstoffgas mit besonders hoher Reinheit bereitgestellt. Dadurch, dass durch die protonenleitende Membran ausschließlich Protonen wandern, ist die Reinheit des erhaltenen Wasserstoffgases sehr hoch. Für Folgeprozesse schädliche Verunreinigungen, insbesondere Katalysatorgifte, wie Amine, Kohlenmonoxid oder Schwefelverbindungen treten nicht auf. Die Qualität des bereitgestellten Wasserstoffgases ist erhöht. Das Risiko, dass ein Fahrzeug, das mit derartigem Wasserstoffgas betankt wird, aufgrund von verunreinigtem Wasserstoffgas geschädigt werden könnte, ist reduziert und im Wesentlichen ausgeschlossen.

Ein Verfahren gemäß Anspruch 11 ist besonders effektiv umsetzbar. Überraschend wurde gefunden, dass als Wasserstoffträgermedium eine organische Verbindung in fester, flüssiger oder gasförmiger Form dient, die mindestens eine sekundäre Alkoholfunktion oder mindestens eine sekundäre Aminfunktion trägt. Besonders bevorzugt sind die folgenden Wasserstoffträgermedien, wobei in der nachfolgenden Aufzählung zunächst die zumindest teilweise beladene, also wasserstoffreiche Form und danach die zumindest teilweise entladene, also wasserstoffarme Form des Wasserstoffträgermediums genannt werden:
2-Propanol / Aceton
2-Butanol / 2-Butanon
2-Pentanol / 2-Pentanon
3-Pentanol / 3-Pentanon
2,3-Butandiol / 2,3-Butandion
2,3-Pentandiol / 2,3 Pentadion
2,4-Pentadiol / 2,4-Pentadion
2,3,4-Pentatriol /2,3,4-Pentatrion
2,3-Hexadiol / 2,3-Hexadion
2,4-Hexadiol / 2,4-Hexadion
2,5-Hexadiol / 2,5-Hexadion
Cyclopentanol / Cyclopentanon
Cyclohexanol / Cyclohexanon

Auch Mischungen dieser Substanzen sind möglich, sowie Mischungen mit inerten, weiteren Flüssigkeiten, insbesondere Wasser.

Zusätzlich oder alternativ kann das Wasserstoffträgermedium auch dadurch gebildet sein, dass Wasserstoff an einer oder an mehreren C-H-Bindungen jeweils durch ein Fluoratom ersetzt ist.

Das Wasserstoffspeichermedium ist eine Flüssigkeit. Es ist vorgesehen, das flüssige, wasserstoffreiche Wasserstoffspeichermedium oder Gemische flüssiger, wasserstoffreicher Wasserstoffspeichermedien in einem Vorratsbehälter oder Tank bereitzustellen, die für die Verwendung in der Einrichtung und insbesondere zur Übertragung von Wasserstoff auf das Wasserstoffträgermedium genutzt wird. Bei dieser Übertragung wandelt sich das flüssige, wasserstoffreiche Wasserstoffspeichermedium oder die entsprechenden Gemische in eine wasserstoffarme Form. Das flüssige, wasserstoffreiche Wasserstoffspeichermedium stellt Wasserstoff in gebundener Form, insbesondere in chemisch gebundener Form bereit. Die Handhabung von molekularem, gasförmigen Wasserstoff, dessen Lagerung und Handhabung kompliziert und sicherheitstechnisch riskant ist und daher einen hohen apparativen und damit verbundenen Kostenaufwand erfordert, um sicherheitstechnische Risiken zu minimieren, kann dadurch umgangen werden.

Das verwendete flüssige, wasserstoffreiche Wasserstoffspeichermedium ist insbesondere die wasserstoffreiche Verbindung eines LOHC-Systems wie es dem Stand der Technik aus Accounts of Chemical Research, 2017, 50(1), 74-85 bekannt ist. Die Wasserstoffbereitstellung in Form einer wasserstoffreichen LOHC-Verbindung hat den besonderen Vorteil, dass LOHC-Wasserstoffspeicherverbindungen unter den verwendeten Lager- und Prozessbedingungen als organische Verbindung in flüssiger Form vorliegen. Insbesondere ermöglichen die LOHC-Wasserstoffspeichermedien, dass sie reversibel mit Wasserstoff beladen und von Wasserstoff entladen werden können. Die physikochemischen Eigenschaften der LOHC-Wasserstoffspeichermedien haben hohe Ähnlichkeit zu herkömmlichen flüssigen Kraftstoffen, sodass Tanks, Pumpen und Tankfahrzeuge zum Transport und als Behälter zur Lagerung aus dem Bereich der Kraftstoff- und Brennstofflogistik genutzt werden können. Die Wasserstoffspeicherung in chemisch gebundener Form in einer organischen Flüssigkeit erlaubt eine drucklose Lagerung bei Normalbedingungen über große Zeiträume ohne signifikanten Wasserstoffverlust.

Als flüssige, wasserstoffreiche LOHC-Wasserstoffspeichermedien sind insbesondere gesättigte, zyklische Kohlenwasserstoffe mit einem oder mehreren Sechsringen geeignet, die bei Wasserstoffabgabe in aromatische Verbindungen mit einem *π*-Elektronensystem oder mehreren *π-*Elektronen¬systemen überführt werden und durch katalytisches Hydrieren aus dieser wasserstoffarmen Form wieder gewonnen werden können. Als flüssige, wasserstoffreiche LOHC-Wasserstoffspeichermedien können insbesondere Perhydro-Dibenzyltoluole und Perhydro-Benzyltoluole als Reinstoffe, isomere Gemische oder Mischungen dieser Substanzen miteinander verwendet werden. Es ist auch möglich, als flüssige, wasserstoffreiche LOHC-Wasserstoffspeichermedien heteroatomhaltige, zyklische Verbindungen zu nutzen, die bei Wasserstoffabgabe in wasserstoffarme, heteroaromatische Verbindungen mit einem π-Elektronensystem oder mehreren π-Elektronensystemen überführt werden. Insbesondere sind Perhydro-N-Ethylcarbazol, Perhydro-N-Propylcarbazol, Perhydro-N-Isopropylcarbazol, Perhydro-N-Butylcarbazol, Perhydro-N-Ethylindol oder Mischungen dieser Substanzen miteinander geeignet.

Das flüssige, wasserstoffreiche Wasserstoffspeichermedium und insbesondere ein mit Wasserstoff beladenes LOHC-Wasserstoffspeichermedium sowie Gemische solcher Verbindungen stellen eine geeignete Transportform und Speicherform für den chemisch gebundenen Wasserstoff dar, da die physikalisch-chemischen Eigenschaften des Wasserstoffbeladenen LOHC-Wasserstoffspeichermediums denen von Diesel und anderen Kraftstoffen stark ähneln.

Ein Verfahren gemäß Anspruch 12 ermöglicht die vorteilhafte Nutzung des Wasserstoffspeichermediums, insbesondere dessen hohe Speicherdichte für Wasserstoffgas.

Sowohl die in den Patentansprüchen angegebenen Merkmale als auch die in dem nachliegenden Ausführungsbeispiel angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildung des Erfindungsgegenstands keine Einschränkung dar, sondern weisen im Wesentlichen lediglich beispielhaften Charakter auf.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine stark schematische Ansicht einer Wasserstofftankstelle mit einer Einrichtung, die eine erfindungsgemäße Vorrichtung umfasst,
- Fig. 2: eine vergrößerte Detaildarstellung der erfindungsgemäßen Vorrichtung gemäß Fig. 1.

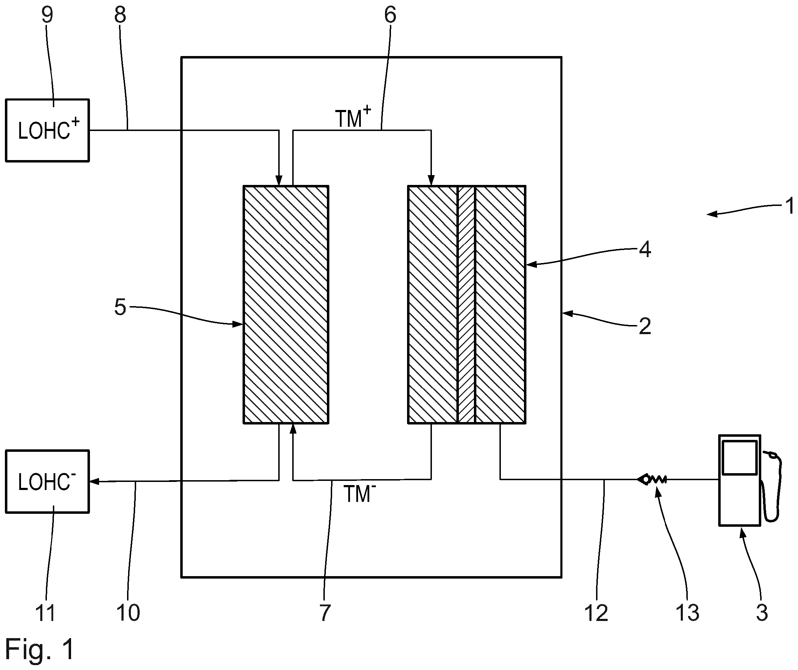

Eine in Fig. 1 als Ganzes mit 1 gekennzeichnete Wasserstofftankstelle umfasst eine Einrichtung 2 zum Freisetzen von chemisch, insbesondere organisch, gebundenem Wasserstoff von einem Wasserstoffträgermedium. Gemäß dem gezeigten Ausführungsbeispiel dient als Wasserstoffträgermedium 2-Propanol. Die Wasserstofftankstelle 1 umfasst ferner eine Abgabeeinheit 3 in Form einer Zapfsäule, die insbesondere die Abgabe von Wasserstoffgas unter Hochdruck in ein wasserstoffbetriebenes Fahrzeug ermöglicht.

Die Einrichtung 2 umfasst eine Vorrichtung 4 zum Freisetzen des chemisch gebundenen Wasserstoffs von dem Wasserstoffträgermedium. Die Vorrichtung 4 ist als elektrochemischer Direkt-Kompressor ausgeführt. Die Einrichtung 2 umfasst ferner einen Transferhydrierreaktor 5 zum Transferieren von Wasserstoff von dem Wasserstoffspeichermedium auf das Wasserstoffträgermedium.

Der Transferhydrierreaktor 5 ist mit der Vorrichtung 4 über eine Zuführleitung 6 und eine Rückführleitung 7 fluidtechnisch verbunden.

Der Transferhydrierreaktor 5 ist ferner über eine erste Leitung 8 mit einem ersten Speicherbehälter 9 verbunden, in dem zumindest teilweise geladenes Wasserstoffspeichermedium (LOHC⁺) gespeichert ist. Der Transferhydrierreaktor 5 ist über eine zweite Leitung 10 mit einem zweiten Speicherbehälter 11 verbunden, in dem zumindest teilweise entladenes Wasserstoffspeichermedium (LOHC⁻) gespeichert ist.

Die Vorrichtung 4 ist über eine Druckleitung 12 mit der Abgabeeinheit 3 verbunden. An der Druckleitung 12 ist ein Druckventil 13 angeordnet, um das in der Vorrichtung 4 freigesetzte Wasserstoffgas mit einem gewünschten Druck an der Abgabeeinheit 3 zur Verfügung zu stellen. Das Druckventil 13 ist in Fig. 1 vereinfacht als Federkraft-Druckventil symbolisiert. Das Druckventil 13 kann auch als schaltbares Druckventil ausgeführt sein, das beispielsweise dann die Druckleitung 12 freigibt, wenn ein mittels eines nicht dargestellten Sensors gemessener Soll-Druck in der Vorrichtung 4 und/oder in der Druckleitung 12 anliegt.

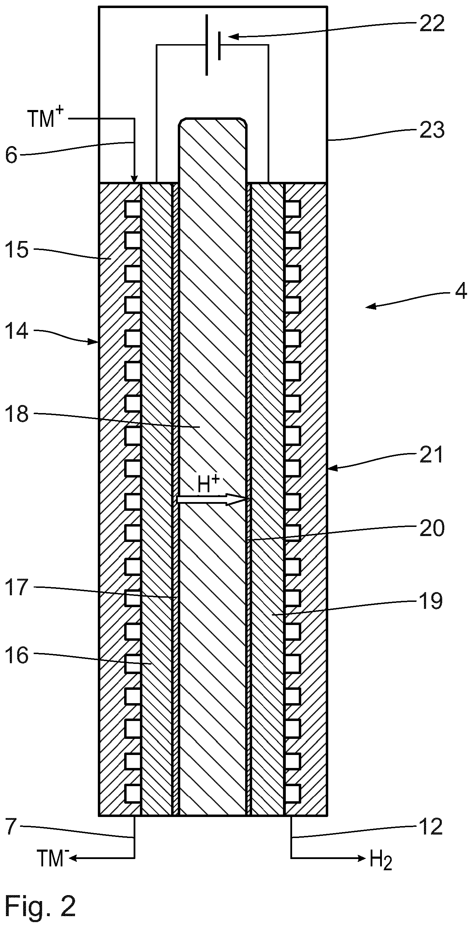

Nachfolgend wird der Aufbau der Vorrichtung 4 anhand von Fig. 2 näher erläutert.

Die Vorrichtung 4 weist eine Anodenkammer 14 auf, in der die Zuführleitung 6 mündet. In der Anodenkammer 14 kann das zumindest teilweise beladene Wasserstoffträgermedium bereitgestellt werden. Die Anodenkammer 14 umfasst ein Strömungsfeld 15. An das Strömungsfeld 15 grenzt eine Diffusionsschicht 16 unmittelbar an. Mit dem Strömungsfeld 15 wird eine gleich verteilte Strömung des zumindest teilweise beladenen Wasserstoffträgermediums erreicht und an die Diffusionsschicht 16 abgegeben. Die Diffusionsschicht bildet eine Anode 16, die an die Anodenkammer 14, also das Strömungsfeld 15 angrenzt. Die Anode 16 weist einen Anodenkatalysator 17 auf, der gemäß dem gezeigten Ausführungsbeispiel Platin und Ruthenium aufweist. Es können auch andere Elemente in dem Anodenkatalysator vorgesehen sein, insbesondere zusätzlich oder anstelle von Ruthenium die Elemente Palladium, Iridium, Rhodium, Zinn, Gallium, Chrom, Molybdän, Wolfram, Eisen, Kobalt, Nickel, Mangan, Kupfer, Zink, Silber oder Gold.

Der Anodenkatalysator 17 ist an der Anode 16 angebracht. Die Anode 16 ist über eine protonenleitende Membran 18 mit einer Kathode 19 verbunden. Der Anodenkatalysator 17 ist der protonenleitenden Membran 18 zugewandt. Die Kathode 19 ist ebenfalls als Diffusionsschicht ausgeführt. Die Kathode 19 weist einen Kathodenkatalysator 20, der der protonenleitenden Membran 18 zugewandt ist. Der Kathodenkatalysator 20 weist gemäß dem gezeigten Ausführungsbeispiel Platin auf. Es können auch andere Elemente in dem Kathodenkatalysator vorgesehen sein, insbesondere zusätzlich zu Platin die Elemente Ruthenium, Palladium, Iridium, Rhodium, Zinn, Gallium, Chrom, Molybdän, Wolfram, Eisen, Kobalt, Nickel, Mangan, Kupfer, Zink, Silber oder Gold.

An die Kathode 19 grenzt eine Kathodenkammer 21 an, die als Strömungsfeld ausgeführt ist. An die Kathodenkammer 21 ist die Druckleitung 12 angeschlossen. Über die Druckleitung 12 wird aus der Kathodenkammer 21 Wasserstoffgas unter Hochdruck abgegeben. An die Anodenkammer 14 ist, insbesondere an einem der Zuführleitung 6 gegenüberliegenden Ende die Rückführleitung 7 angeschlossen.

Die Anode 16 und die Kathode 19 sind elektrisch über eine Spannungsquelle 22 verbunden. Die Spannungsquelle 22 stellt eine für die elektrochemische Kompression erforderliche Spannung von 100mV bis 1400mV, insbesondere 300mV bis 1100mV und insbesondere 500mV bis 900mV zur Verfügung.

Gemäß dem gezeigten Ausführungsbeispiel sind die Anodenkammer 14 mit der Anode 16, die Kathodenkammer 21 mit der Kathode 19 und die dazwischen angeordnete protonenleitenden Membran 18 in einem gemeinsamen Gehäuse 23 kompakt angeordnet und zusammengefasst. Gemäß dem gezeigten Ausführungsbeispiel ist auch die Spannungsquelle 22 innerhalb des Gehäuses 23 angeordnet. Die Spannungsquelle 22 kann auch außerhalb des Gehäuses 23 angeordnet sein.

Nachfolgend wird die Funktion der Wasserstofftankstelle 1 näher erläutert.

Zumindest teilweise beladenes Wasserstoffspeichermedium LOHC⁺ wird aus dem ersten Speicherbehälter 9 über die erste Leitung 8 in den Transferhydrierreaktor 5 gefördert. In dem Transferhydrierreaktor 5 wird Wasserstoff von dem Wasserstoffspeichermedium LOHC⁺ unmittelbar auf das zumindest teilweise entladene Wasserstoffträgermedium TM⁻ übertragen und dadurch das Wasserstoffspeichermedium zumindest teilweise zu LOHC⁻ entladen und das Wasserstoffträgermedium zu TM⁺ beladen.

Gemäß dem gezeigten Ausführungsbeispiel dient als LOHC⁺ Perhydro-Dibenzyltoluol, das zu Dibenzyltoluol entladen wird. Das teilweise entladene LOHC⁻ wird aus dem Transferhydrierreaktor 5 über die zweite Leitung 10 abgeführt und in dem zweiten Speicherbehälter 11 eingelagert.

Es ist grundsätzlich denkbar, dass die Wasserstofftankstelle 1 eine nicht dargestellte Beladeeinheit aufweist. Beladeeinheit ist insbesondere als Hydrierreaktor ausgeführt und dient zum hydrieren des LOHC⁻ zu LOHC⁺. Eine derartige Beladeeinheit ist insbesondere mit dem ersten Speicherbehälter 9 und dem zweiten Speicherbehälter 10 über Fluidleitungen direkt verbunden. Eine derartige Wasserstofftankstelle 1 könnte autark betrieben werden, wenn beispielsweise elektrische Energie bereitsteht, um Wasserstoffgas beispielsweise mittels Elektrolyse herzustellen und für die Beladung des Wasserstoffspeichermediums von LOHC⁻ zu LOHC⁺ zu nutzen.

Alternativ ist es denkbar, dass das Wasserstoffspeichermedium LOHC⁺ für die Versorgung der Wasserstofftankstelle 1 angeliefert und in dem ersten Speicherbehälter 9 gespeichert wird. Die Anlieferung kann beispielsweise mit einem Tankfahrzeug und/oder mittels einer dafür vorgesehenen Rohrleitung erfolgen. Entsprechend wird das entladene Wasserstoffspeichermedium LOHC⁻ aus dem zweiten Speicherbehälter 11 abtransportiert.

Das in dem Transferhydrierreaktor 5 beladene Wasserstoffträgermedium TM⁺ wird über die Zuführleitung 6 der Anodenkammer 14 in der Vorrichtung 4 zugeführt.

Das zumindest teilweise beladene Wasserstoffträgermedium TM⁺ wird über das Strömungsfeld 15 der Diffusionsschicht 16 an der Anode zugeführt. Aufgrund der besonderen Eignung des Anodenkatalysator 17 werden von dem Wasserstoffträgermedium TM⁺ an der Anode Protonen H⁺ abgespalten und mit Hilfe des angelegten elektrochemischen Potenzials durch die protonenleitende Membran 18 gefördert. An der Anode 16 findet die folgende Reaktion statt:

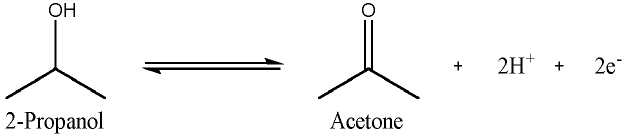

Auf der Seite der Kathode 19 werden die Protonen H⁺ elektrochemisch zu Wasserstoffgas H₂ reduziert:

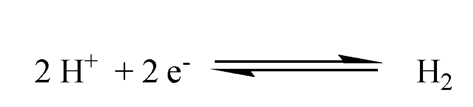

Das zumindest teilweise entladene Wasserstoffträgermedium TM⁻ wird aus der Vorrichtung 4 über die Rückführleitung 7 dem Transferhydrierreaktor 5 rückgeführt und kann dort durch Transferhydrierung wieder beladen werden. Das Wasserstoffträgermedium wird durch die zyklische Be- und Entladung nicht verbraucht.

Da ausschließlich Protonen durch die Membran 18 geleitet werden, wird der Wasserstoff gereinigt und verdichtet.

Gemäß dem gezeigten Ausführungsbeispiel wird als Wasserstoffträgermedium 2-Propanol genutzt, das zu Aceton dehydriert wird. Durch die Kombination der Transferhydrierung aus Perhydro-Dibenzyltoluol kann die vergleichsweise geringe Speicherdichte des Wasserstoffträgermediums kompensiert werden. Zugleich können die hervorragenden sicherheitstechnischen Eigenschaften von Perhydro-Dibenzyltoluol für die Wasserstofflogistik in vollem Umfang genutzt werden.

Die Vorrichtung 4 kann auch mit dem Wasserstoffträgermedium genutzt werden. Das Wasserstoffträgermedium kann im beladenen und entladenen Zustand jeweils in Speicherbehältern gespeichert werden und zum Betrieb der Wasserstofftankstelle 1 an- und abtransportiert werden. Die Wasserstofftankstelle 1 kann insbesondere auch ohne Transferhydrierreaktor 5 und ohne die Speicherbehälter 9, 11 ausgeführt sein.

## Patentansprüche

1. Vorrichtung zum Freisetzen von chemisch gebundenem Wasserstoff von einem Wasserstoffträgermedium in Form von Wasserstoffgas unter Druck, wobei die Vorrichtung aufweist
a. eine Anodenkammer (14) zur Bereitstellung des zumindest teilweise beladenen Wasserstoffträgermediums (TM⁺),
b. eine an die Anodenkammer (14) angrenzende Anode (16) mit einem Anodenkatalysator (17),
c. eine mit der Anode (14) über eine protonenleitende Membran (18) und über eine Spannungsquelle (22) verbundene Kathode (19), wobei die protonenleitende Membran ein perfluoriertes Copolymer aufweist, das als ionische Gruppe eine Sulfogruppe enthält,
d. eine an die Kathode (19) mit einem Kathodenkatalysator (20) angrenzende Kathodenkammer (21) zur Aufnahme von an der Kathode (19) freigesetztem Wasserstoffgas,
**dadurch gekennzeichnet, dass**
an die Kathodenkammer (21) eine Druckleitung (12) mit einem Druckventil (13) angeschlossen ist.

2. Vorrichtung gemäß Anspruch 1, **dadurch gekennzeichnet, dass** der Anodenkatalysator (17) Platin und mindestens eines der Elemente Ruthenium, Palladium, Iridium, Rhodium, Zinn, Gallium, Chrom, Molybdän, Wolfram, Eisen, Kobalt, Nickel, Mangan, Kupfer, Zink, Silber oder Gold aufweist.

3. Vorrichtung gemäß einem der vorstehenden Ansprüche, **dadurch gekennzeichnet, dass** der Kathodenkatalysator (20) Platin und insbesondere zusätzlich zu Platin mindestens eines der Elemente Ruthenium, Palladium, Iridium, Rhodium, Zinn, Gallium, Chrom, Molybdän, Wolfram, Eisen, Kobalt, Nickel, Mangan, Kupfer, Zink, Silber oder Gold aufweist.

4. Vorrichtung gemäß einem der vorstehenden Ansprüche, **dadurch gekennzeichnet, dass** die Anodenkammer (14) mit der Anode (16), die protonenleitende Membran (18) und die Kathodenkammer (21) mit der Kathode (19) in einem Gehäuse (23) angeordnet sind.

5. Einrichtung mit einer Vorrichtung (4) gemäß einem der vorstehenden Ansprüche und mit einem mit der Vorrichtung (4) in Fluidverbindung stehenden Transferhydrierreaktor (5) zum Transferhydrieren des Wasserstoffträgermediums (TM⁻) mittels eines Wasserstoffspeichermediums (LOHC⁺).

6. Einrichtung gemäß Anspruch 5, **dadurch gekennzeichnet, dass** der Transferhydrierreaktor (5) mit einem ersten Speicherbehälter (9) verbunden ist, in dem zumindest teilweise beladenes Wasserstoffspeichermedium (LOHC⁺) gespeichert ist, und/oder mit einem zweiten Speicherbehälter (11) verbunden ist, in dem zumindest teilweise entladenes Wasserstoffspeichermedium (LOHC⁻) gespeichert ist.

7. Wasserstofftankstelle mit einer Vorrichtung (4) gemäß einem der Ansprüche 1 bis 4 oder mit einer Einrichtung (2) gemäß Anspruch 5 oder 6, wobei eine Abgabeeinheit (3) zur Abgabe von Wasserstoffgas unter Hochdruck in ein Fahrzeug an die Vorrichtung (4) angeschlossen ist.

8. Verfahren zum Freisetzen von chemisch gebundenem Wasserstoff von einem Wasserstoffträgermedium in Form von Wasserstoffgas unter Druck umfassend die Verfahrensschritte
a. Bereitstellen des zumindest teilweise beladenen Wasserstoffträgermediums (TM⁺) in einer Anodenkammer (14),
b. Abspalten von Protonen von dem zumindest teilweise beladenen Wasserstoffträgermedium (TM⁺) an einer an die Anodenkammer (14) angrenzenden Anode (16), die einen Anodenkatalysator (17) aufweist,
c. Fördern der Protonen von der Anode (16) durch eine protonenleitende Membran (18) zu einer Kathode (19),
d. Reduzieren der Protonen an der Kathode (19) zu Wasserstoffgas,
e. Erhöhen des Drucks des Wasserstoffgases in einer an der Kathode (19) angrenzenden Kathodenkammer (21),
**dadurch gekennzeichnet, dass** an die Kathodenkammer (21) eine Druckleitung (12) mit einem Druckventil (13) angeschlossen ist
und
das Wasserstoffträgermedium eine organische Verbindung ist.

9. Verfahren gemäß Anspruch 8, **dadurch gekennzeichnet, dass** das Wasserstoffgas in der Kathodenkammer (21) mit einem Druck von mindestens 5 bar, insbesondere mindestens 50 bar, insbesondere mindestens 350 bar und insbesondere mindestens 900 bar vorliegt.

10. Verfahren gemäß Anspruch 8 oder 9, **dadurch gekennzeichnet, dass** das Wasserstoffgas in der Kathodenkammer (21) mit einer Reinheit von mindestens 99%, insbesondere mindestens 99,9%, insbesondere mindestens 99,99% und insbesondere mindestens 99,999% vorliegt.

11. Verfahren gemäß einem der Ansprüche 8 bis 10, **dadurch gekennzeichnet, dass** als zumindest teilweise beladenes Wasserstoffträgermedium eine organische Verbindung (TM⁺) dient, die mindestens eine sekundäre Alkoholfunktion oder mindestens eine sekundäre Aminfunktion trägt, und insbesondere 2-Propanol als organische Verbindung (TM⁺) dient.

12. Verfahren gemäß einem der Ansprüche 8 bis 11, **dadurch gekennzeichnet, dass** zumindest teilweise entladenes Wasserstoffträgermedium (TM⁻), insbesondere ein Keton, insbesondere Aceton, in einem Transferhydrierreaktor (5) mittels eines Wasserstoffspeichermediums (LOHC⁺) zumindest teilweise beladen wird.

## Claims

1. Apparatus for release of chemically bound hydrogen from a hydrogen carrier medium in the form of hydrogen gas under pressure, wherein the apparatus has
a. an anode chamber (14) for provision of the at least partly laden hydrogen carrier medium (TM⁺),
b. an anode (16) adjoining the anode chamber (14) and having an anode catalyst (17),
c. a cathode (19) connected to the anode (14) via a proton-conducting membrane (18) and via a voltage source (22), where the proton-conducting membrane includes a perfluorinated copolymer containing a sulfo group as ionic group,
d. a cathode chamber (21) for receiving hydrogen gas released at the cathode (19), adjoining the cathode (19) with a cathode catalyst (20),
**characterized in that**
a pressure conduit (12) with a pressure valve (13) is connected to the cathode chamber (21).

2. Apparatus according to Claim 1, **characterized in that** the anode catalyst (17) includes platinum and at least one of the elements ruthenium, palladium, iridium, rhodium, tin, gallium, chromium, molybdenum, tungsten, iron, cobalt, nickel, manganese, copper, zinc, silver or gold.

3. Apparatus according to either of the preceding claims, **characterized in that** the cathode catalyst (20) includes platinum and, in particular in addition to platinum, at least one of the elements ruthenium, palladium, iridium, rhodium, tin, gallium, chromium, molybdenum, tungsten, iron, cobalt, nickel, manganese, copper, zinc, silver or gold.

4. Apparatus according to any of the preceding claims, **characterized in that** the anode chamber (14) with the anode (16), the proton-conducting membrane (18) and the cathode chamber (21) with the cathode (19) are disposed in a housing (23).

5. Device having an apparatus (4) according to any of the preceding claims and having a transfer hydrogenation reactor (5), fluidically connected to the apparatus (4), for transfer hydrogenation of the hydrogen carrier medium (TM⁻) by means of a hydrogen storage medium (LOHC⁺).

6. Device according to Claim 5, **characterized in that** the transfer hydrogenation reactor (5) is connected to a first storage vessel (9) in which at least partly laden hydrogen storage medium (LOHC⁺) is stored, and/or to a second storage vessel (11) in which at least partly unladen hydrogen storage medium (LOHC⁻) is stored.

7. Hydrogen filling station having an apparatus (4) according to any of Claims 1 to 4 or having a device (2) according to Claim 5 or 6, wherein a release unit (3) for release of hydrogen gas under high pressure into a vehicle is connected to the apparatus (4).

8. Method of releasing chemically bound hydrogen from a hydrogen carrier medium in the form of hydrogen gas under pressure, comprising the method steps of
a. providing the at least partly laden hydrogen carrier medium (TM⁺) in an anode chamber (14),
b. eliminating protons from the at least partly laden hydrogen carrier medium (TM⁺) at an anode (16) which has an anode catalyst (17) and adjoins the anode chamber (14),
c. conveying protons from the anode (16) through a proton-conducting membrane (18) to a cathode (19),
d. reducing the protons at the cathode (19) to hydrogen gas,
e. increasing the pressure of the hydrogen gas in a cathode chamber (21) adjoining the cathode (19),
**characterized in that** a pressure conduit (12) having a pressure valve (13) is connected to the cathode chamber (21) and the hydrogen carrier medium is an organic compound.

9. Method according to Claim 8, **characterized in that** the hydrogen gas in the cathode chamber (21) is at a pressure of at least 5 bar, in particular at least 50 bar, in particular at least 350 bar and in particular at least 900 bar.

10. Method according to Claim 8 or 9, **characterized in that** the hydrogen gas in the cathode chamber (21) is at a purity of at least 99%, in particular at least 99.9%, in particular at least 99.99% and in particular at least 99.999%.

11. Method according to any of Claims 8 to 10, **characterized in that** at least partly laden hydrogen carrier medium used is an organic compound (TM⁺) bearing at least one secondary alcohol function or at least one secondary amine function, and the organic compound (TM⁺) used is in particular 2-propanol.

12. Method according to any of Claims 8 to 11, **characterized in that** at least partly unladen hydrogen carrier medium (TM⁻), especially a ketone, especially acetone, is at least partly laden in a transfer hydrogenation reactor (5) by means of a hydrogen storage medium (LOHC⁺).

## Revendications

1. Dispositif pour libérer de l'hydrogène chimiquement lié à partir d'un milieu porteur d'hydrogène sous forme d'hydrogène gazeux sous pression, le dispositif comprenant
a. une chambre anodique (14), pour fournir le milieu porteur d'hydrogène (TM⁺) au moins partiellement chargé,
b. une anode (16), contiguë à la chambre anodique (14), comportant un catalyseur anodique (17),
c. une cathode (19), reliée à l'anode (14) par une membrane (18) conductrice de protons et une source de tension (22), la membrane conductrice de protons comportant un copolymère perfluoré qui, comme groupe ionique, contient un groupe sulfo,
d. une chambre cathodique (21) contiguë à la cathode (19) comportant un catalyseur cathodique (20), pour recevoir l'hydrogène gazeux libéré de la cathode (19),
**caractérisé en ce qu'**une conduite sous pression (12) comportant une soupape de refoulement (13) est raccordée à la chambre cathodique (21).

2. Dispositif selon la revendication 1, **caractérisé en ce que** le catalyseur anodique (17) est le platine et comprend au moins l'un des éléments ruthénium, palladium, iridium, rhodium, étain, gallium, chrome, molybdène, tungstène, fer, cobalt, nickel, manganèse, cuivre, zinc, argent ou or.

3. Dispositif selon l'une des revendications précédentes, **caractérisé en ce que** le catalyseur cathodique (20) est le platine et comprend en particulier en plus du platine au moins l'un des éléments ruthénium, palladium, iridium, rhodium, étain, gallium, chrome, molybdène, tungstène, fer, cobalt, nickel, manganèse, cuivre, zinc, argent ou or.

4. Dispositif selon l'une des revendications précédentes, **caractérisé en ce que** la chambre anodique (14) avec l'anode (16), la membrane conductrice de protons (18) et la chambre cathodique (21) avec la cathode (19) sont disposées dans un boîtier (23).

5. Appareillage comportant un dispositif (4) selon l'une des revendications précédentes et un réacteur d'hydrogénation par transfert (5) en liaison fluidique avec le dispositif (4), pour l'hydrogénation par transfert du fluide porteur d'hydrogène (TM⁻) à l'aide d'un milieu de stockage d'hydrogène (LOHC⁺).

6. Appareillage selon la revendication 5, **caractérisé en ce que** le réacteur d'hydrogénation par transfert (5) est relié à un récipient de stockage (9), dans lequel est stocké un milieu de stockage d'hydrogène (LOHC⁺) au moins partiellement chargé, et/ou est relié à un deuxième récipient de stockage (11), dans lequel est stocké un milieu de stockage d'hydrogène (LOHC⁻) au moins partiellement déchargé.

7. Station d'hydrogène, comportant un dispositif (4) selon l'une des revendications 1 à 4 ou un appareillage (2) selon la revendication 5 ou 6, une unité de distribution (3), destinée à distribuer de l'hydrogène gazeux sous haute pression dans un véhicule étant raccordée au dispositif (4).

8. Dispositif de libération d'hydrogène chimiquement lié d'un milieu porteur d'hydrogène sous forme d'hydrogène gazeux sous pression, comprenant les étapes suivantes :
a. fourniture du milieu porteur d'hydrogène (TM⁺) au moins partiellement chargé dans une chambre anodique (14),
b. dissociation de protons à partir du milieu porteur d'hydrogène (TM⁺) au moins partiellement chargé, pour aller à une anode (16), qui comprend un catalyseur anodique (17), contiguë à la chambre anodique (14),
c. refoulement des protons de l'anode (16) à une cathode (19) par une membrane conductrice de protons (18),
d. réduction des protons sur la cathode (19) en hydrogène gazeux,
e. élévation de la pression de l'hydrogène gazeux dans une chambre cathodique (21) contiguë à la cathode (19),
**caractérisé en ce qu'**une conduite sous pression (12), comportant une soupape de refoulement (13), est raccordée à la chambre cathodique (21), et que le milieu porteur d'hydrogène est un composé organique.

9. Procédé selon la revendication 8, **caractérisé en ce que** l'hydrogène gazeux est présent dans la chambre cathodique (21) sous une pression d'au moins 5 bar, en particulier d'au moins 50 bar, en particulier d'au moins 350 bar et en particulier d'au moins 900 bar.

10. Procédé selon la revendication 8 ou 9, **caractérisé en ce que** l'hydrogène gazeux est présent dans la chambre cathodique (21) avec une pureté d'au moins 99 %, en particulier d'au moins 99,9 %, en particulier d'au moins 99,99 % et en particulier d'au moins 99,999 %.

11. Procédé selon l'une des revendications 8 à 10, **caractérisé en ce qu'**on utilise comme milieu porteur d'hydrogène au moins partiellement chargé un composé organique (TM⁺) qui porte au moins une fonction alcool secondaire ou au moins une fonction amine secondaire, et en particulier du 2-propanol comme composé organique (TM⁺).

12. Procédé selon l'une des revendications 8 à 11, **caractérisé en ce qu'**on charge au moins partiellement un milieu porteur d'hydrogène (TM⁻) au moins partiellement chargé, en particulier une cétone, en particulier l'acétone, dans un réacteur d'hydrogénation par transfert (5) à l'aide d'un milieu de stockage d'hydrogène (LOHC⁺).
